# EUROPEAN PATENT SPECIFICATION

(11) **EP 0 962 391 B1**
(45) Date of publication and mention of the grant of the patent: **23.11.2005**
(21) Application number: 99116441.9
(22) Date of filing: 08.07.1997
(51) Int. Cl.: B65B 61/18, B31B 1/84

(54) **A method of applying fitments to containers and apparatus for use in the same**
Verfahren zum Anbringen von Ausgiesstüllen an Behältern und Vorrichtung zur Verwendung in demselben
Procédé pour attacher des becs verseurs à des conteneurs et dispositif pour l'utilisation dans celui-ci

(30) Priority: 16.07.1996 US 680901
(43) Date of publication of application: 08.12.1999
(62) Divisional of application: 97304990.1
(73) Proprietor: ELOPAK SYSTEMS AG, 8152 Glattbrugg (CH)
(72) Inventor: Kucera, Mark Robert, Walled Lake, Michigan 48390 (US); Owen, Bary Charles, Southfields, Michigan 48076 (US); Rogalski, Edward M., Muscatine, Iowa 52761 (US)
(74) Representative: Burrows, Anthony Gregory

(56) References cited:
- WO-A-95/10408
- WO-A-96/10515
- US-A- 5 473 857

## Description

This invention relates generally to a method of applying fitments to containers and to apparatus for use in the method and including a container fitment applicator, especially to such applicators for use on carton forming, filling and sealing machines and, more particularly, to such machines in which pour spout fitments are applied while the cartons are being processed thereon.

Forming, filling and sealing machines having pour spout applicators at one of the stations therealong are known. For example, GB-A-2,238,287 discloses an application station at which a rotatable mandrel or bar is provided, with the mandrel having two bosses projecting therefrom. Shortly after one of the bosses has delivered a pouring spout to an opening through a panel of an open top of a carton, the other of the bosses takes a pouring spout from a spout-conveying arrangement, and vice-versa. In more detail, as a carton is indexed into the application station, the mandrel is rotated in the direction of the carton travel into the open top of the carton, aligning the spout-carrying boss with the opening formed in the selected panel of the top closure of the carton; the boss and pouring spout are moved laterally into the opening; the inner flanged end of the pouring spout is secured, such as by ultrasonic welding, to the inner wall around the opening; and the boss is withdrawn from the opening and then rotated out of the open top. An outer cap is attached to the pouring spout before assembly.

US-A-5,484,374 discloses an applicator including a rotatable and translatable anvil having three (or more or fewer) radially extending arms. A mandrel on one arm frictionally engages a pour spout fitment simultaneously with a second mandrel inserting a fitment into a container hole. The applicator relies upon the friction between the interior surface of the fitment and the closely-fitting first mandrel to overcome suction imparted through an aperture in an escapement holding the fitment to withdraw the fitment from the escapement. An ultrasonic sealer vibrates the container wall against the anvil to weld the fitment to the container. The applicator applies one fitment to one container at a time.

Other pouring spout applicators are disclosed in US-A-4,788,811 and US-A-4,386,923. US-A-4,788,811 discloses a horizontally elongated pour spout fitment attaching turret at a location upstream of the usual turret and radial mandrels on which the bottom end closure is folded and sealed. The fitment attaching turret includes a pusher at one station for pushing an open-ended package onto a sucker device holding and inserting a pour spout fitment into an opening in a package top panel. The fitment attaching turret is then rotated to a second station where an anvil is axially inserted into the package, co-operable with an ultrasonic horn for sealing a flange of the fitment to the inner surface of the top panel.

US-A-4,386,923 discloses a bag-in-box arrangement wherein a fitment is attached to the bag which is then inserted through a hole in a flap of the box, while both are in the collapsed or blank state.

Each of US-A-5,267,934 and US-A-5,435,803 discloses pour spout fitment applicators wherein the fitment is applied from within the carton, outwardly through an opening therein.

Furthermore, WO95/10408A discloses an apparatus and method in accordance with the preambles of claims 1 and 4.

According to a first aspect of the present invention, there is provided apparatus for use in applying fitments to containers as defined in claim 1.

According to a second aspect of the present invention, there is provided a method of applying fitments to containers as defined in claim 4.

Owing to the present invention, it is possible to place the fitments positively on the receiving means and so ensure that the fitments are reliably and correctly received by the applicator.

Advantageously, the arms comprise first, second, third and fourth arms, and the driving means is arranged to rotate the applicator so as angularly to position the first and second arms carrying respective first and second fitments ready for concurrent applying of the first and second fitments to respective first and second containers and so as angularly to position the third and fourth arms to receive respective third and fourth fitments.

Thereby, it is possible to provide improved application of fitments to containers on a packaging machine, particularly a carton forming, filling and sealing machine, on which containers are indexed in groups.

The apparatus is particularly applicable to circumstances where containers aligned with the applicator are closely arrayed.

In a preferred embodiment, the apparatus includes a four-armed pour spout fitment applicator which rotates two of its arms into open-topped cartons and applies two flanged pour spout fitments outwardly through openings in a pair of top panels of a pair of adjacent cartons, while its other two arms are positioned to receive two other fitments. A pair of pneumatic piston-and-cylinder devices serve to transport the two other fitments to the other two arms and positively place the same thereon. An external ultrasonic sealer includes a horn which serves to engage the outer panel surfaces to seal the flanges of the fitments to the inner surfaces of the top panels around the openings while the pair of piston-and-cylinder devices are being actuated.

In order that the invention may be clearly understood and readily carried into effect, reference will now be made, by way of example, to the accompanying drawings, in which:-
Figure 1 is a side elevation of a double indexing, forming, filling and sealing machine;
Figure 2 is an enlarged side elevation of a pour spout fitment application station of the machine;
Figure 3 is a schematic, side elevational representation of fifteen operational stages at the station;
Figure 4 is a perspective view of a pour spout fitment applicable at the station; and
Figure 5 is a perspective view of a package produced by the machine.

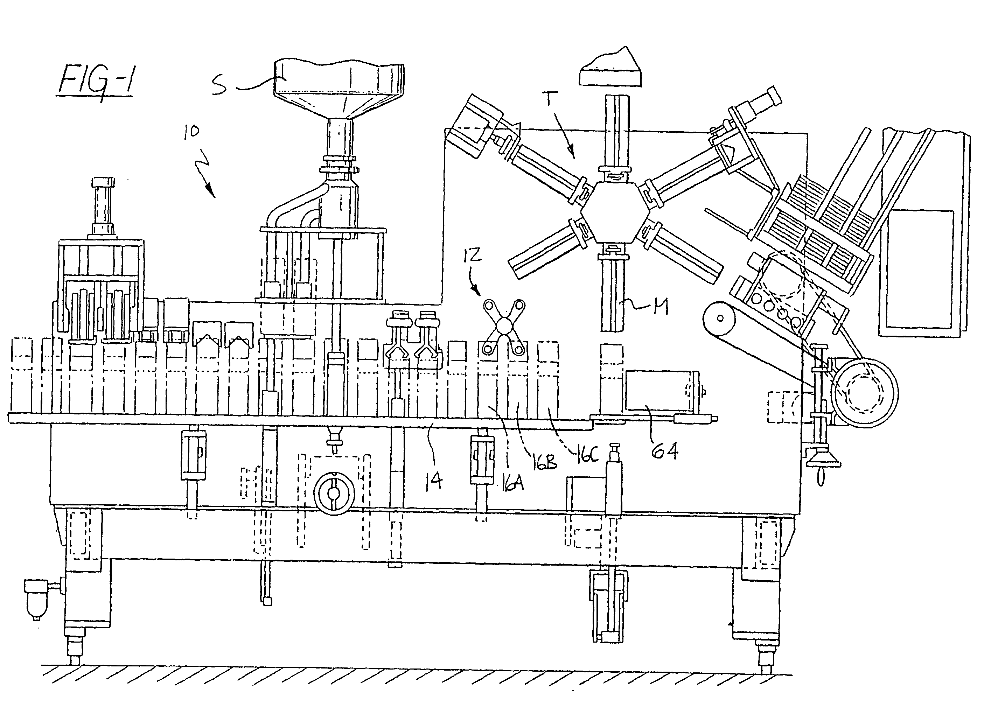

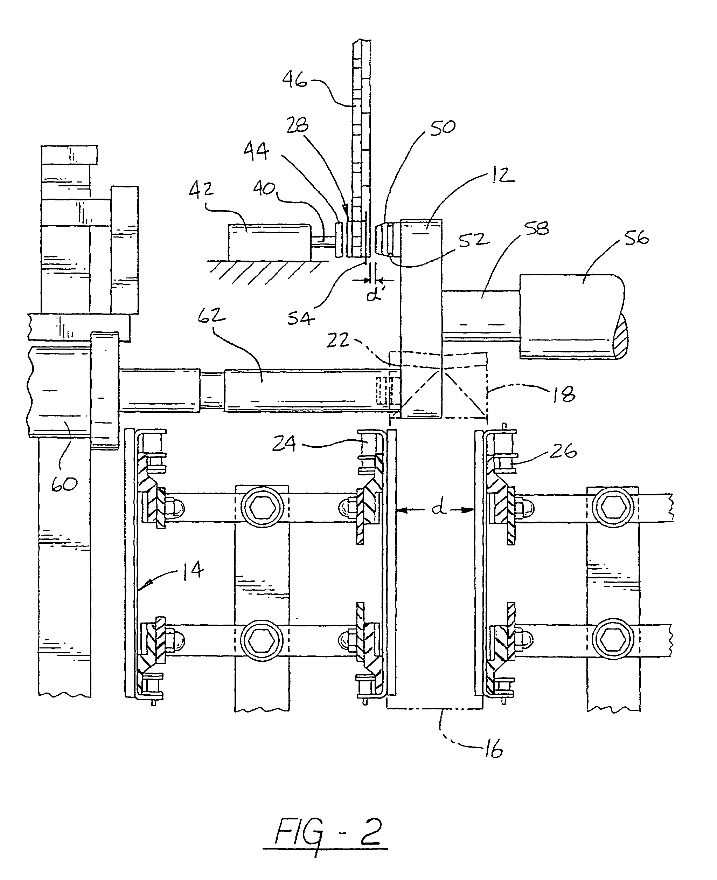

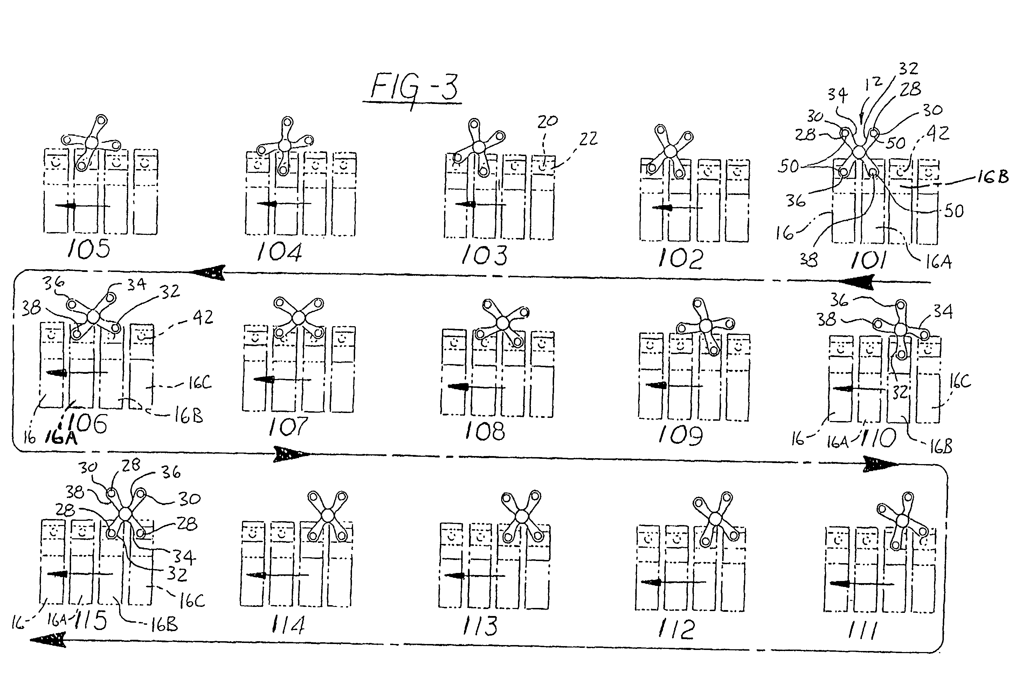

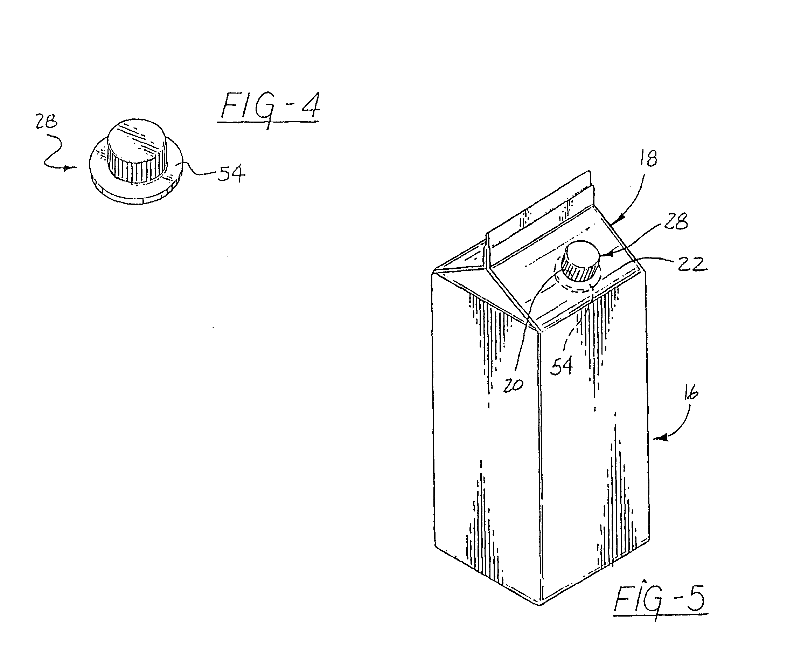

Referring to the drawings, Figures 1 and 2 illustrate a forming, filling and sealing machine 10 embodying a pour spout fitment applicator 12, and including a conveyor 14 carrying thermoplastics-coated cartons 16 having open top closures 18. An opening 20 (see Figures 3 and 5) is formed in a selected panel 22 of each end closure 18. The applicator 12 is mounted on the machine 10 intermediate the usual indexable turret mechanism T including a plurality of mandrels M and a filling station including a source S of a selected liquid product.

As shown in Figure 2, the conveyor 14 comprises two endless chains 24 and 26 spaced a predetermined distance d apart, within which a series of closely spaced-apart cartons 16 are carried, with the panel 22 bearing the opening 20 facing toward one chain 24.

As seen in Figure 3, the pour spout fitment applicator 12 is positioned to receive two pour spout fitments 28 at a time on its two exposed arms 32 and 34 at stage 101, while two fitments on its two inner arms 36 and 38 are positioned for placement, as will be explained, into two top panels 22 of adjacent cartons 16 and 16a during a dwell while being conveyed by the double indexing conveyor 14 (Figure 2). As the conveyor 14 moves through stages 102 to 106, the arm 32 will rotate toward and into carton 16B. During further movement of the conveyor 14 through stages 107 to 110, the arm 34 rotates into carton 16C. During further movement through stages 111 to 115, the arms 32 and 34 will become aligned with the openings 20 in the top panels 22 of the cartons 16B and 16C for placement of two fitments 28 therein, with the arms 36 and 38 now being in the location for receiving two more fitments 28 for the next cycle.

As shown in Figure 3, the arm 32 has rotated through 180° for the cycle from stage 101 to stage 115. Its next 180° rotation will bring the arm 32 back to the stage 101 position, to receive its next pour spout fitment 28. It has been determined, in the example shown, that each carton 16 has indexed through a distance of 7.0 inches (17.78cm.) for a quart processing machine, or 9.0 inches (22.86cm.) for a half-gallon processing machine, in moving from stage 101 to stage 115, along the conveyor 14.

Referring once again to Figure 2, each of two tracks 46 in the form of chutes presents a pour spout fitment 28 at a spacing d' from an aligned, extension-type receiver or spigot 50 of one of the arms of the applicator 12. A piston 40 of a suitable, pneumatic, piston-and-cylinder device 42, having a flanged end 44, which, for some fitment sizes, may include a cylindrical shape for surrounding the fitment 28, serves to push each end fitment from the track 46 onto the spigot 50 of the applicator arm. Each spigot 50 has an elastomeric ring 52 therearound which will assume an interference fit in the inner periphery of the flanged end of the fitment 28.

Each track 46 extends vertically downwardly at the end thereof to terminate adjacent the applicator 12 and is adapted to hold a row of pour spout fitments 28, each having a flange 54 thereon slidably aligned end-to-end in the track, as received from suitable external loading means. Such loading means may include a vibratory parts feeder (not shown), known to have been available from Syntron Co., Homer City, State of Pennsylvania, United States of America. Such a parts feeder automatically orients a load of flanged fitments 28 and feeds them in their oriented attitude to each track 46. A pair of tracks may extend from one parts feeder bowl, or from a pair of feeder bowls.

The flange 54 of the fitment 28 is confined within the edges of the track 46, illustrated diagrammatically in Figure 2, and is snapped outwardly therefrom upon the fitment being pushed by the flanged end 44 of the piston 40.

A drive unit, represented as 56, is connected by a shaft 58 to the centre of the applicator 12. The drive unit 56 is adapted to reciprocate the applicator 12 within the distance d, and to rotate the applicator through repeated 180° cycles shown in Figure 3.

While moving laterally to place two fitments 28 into two openings 20 in two adjacent panels 22 from the arms 36 and 38, the two arms 32 and 34 extend toward two other fitments 28 in the two adjacent tracks 46, stopping the distance d' away therefrom to await the conveyance of the fitments by the pistons 40 and ends 44.

The application station includes two ultrasonic sealers 60 (Figure 2), each including a retractable horn 62 having an axis aligned with the opening 20 through the panel 22. As the applicator 12 places the two fitments 28 into two openings 20, the two vibrating horns 62 engage the outer surfaces of the two panels 22, opposite the flanges 54, thereby to bond the flanges to the inner surfaces of the two panels. While the bonding process is being accomplished, the ends 44 engage the two adjacent fitments 28 and convey them across the spacing d' and slide them onto the two spigots 50.

The horns 62 and the applicator 12 then retract to begin the next cycle.

It should be apparent that there has been described with reference to the drawings an improved carton pour spout fitment applicator that is co-operable with a double indexing conveyor of a high-production, forming, filling and sealing machine.

It should be further apparent that, for a machine which indexes closely arrayed cartons two at a time along one path, only one applicator is employed to serve two adjacent cartons. For such a machine, there would be a dual-mandrel turret, or a single-mandrel turret and a single-to-dual indexing carton transfer mechanism 64 as shown in Figure 1, and as disclosed in US-A-4,456,118, with, of course, downstream multiple breakers, fillers, folders and sealers.

It should also be apparent that the placing means 40-44 is usable with an applicator with either two or three arms instead of the four arms described above.

It should be still further apparent that the placing means 40-44 positively applies pour spout fitments to spigots, in contrast to an applicator which depends upon only a friction fit of a spigot first to insert into and then to pull a fitment from a stationary escapement.

## Claims

1. Apparatus for use in applying fitments to containers, comprising an applicator (12) having at least two arms (32-38) distributed about an axis (58) and each having in a distal end zone thereof receiving means (50) to receive and carry a fitment (28), including a leading flange (54) driving means (56) arranged to rotate said applicator (12) to cause one arm (32) carrying one fitment (28) to align said one fitment (28) with one container (16B) while placing the receiving means of another arm (36) in position to receive another fitment (28) from an adjacent track (46), and also arranged to move the applicator (12) axially to apply said one fitment (28) to said one container (16B) and to bring the receiving means (50) of said other arm (36) to a forward end position (Figure 2), and placing means (40-44) for engaging said other fitment (28) and moving said other fitment (28) from said track (46) towards said other arm (36) **characterized in that** said forward end position (Figure 2) is at a predetermined spacing (d') from a waiting position in said track (46) of the sealing flange (54) of said other fitment (28).

2. Apparatus according to claim 1, and further comprising fixing means (62) for fixing said one fitment (28) to said one container (16B), said placing means (40-44) being arranged to move said other fitment (28) from said track (46) to said other arm (36) in a timed relationship with the fixing of said one fitment (28) to said one container (16B).

3. Apparatus according to claim 1 or 2, wherein said placing means (40-44) includes a piston (40) having end means (44) for abutting against a body of said other fitment (28) and causing a flange (54) on said body to snap out of said track (46) and move through said predetermined distance (d') to mount said other fitment (28) slidably onto the receiving means (50) of said other arm (36).

4. A method of applying to containers fitment including reflective fealing flanges, comprising turning an applicator (12) including a plurality of arms (32-38) so as to bring one receiving means (50) of one (32) of the arms (32-38) to a forward end position (Figure 2) constituting a receiving position to receive one fitment (28), placing said one fitment (28) on said one receiving means (50), further turning the applicator (12) to bring said one receiving means (50) and thus said one fitment (28) to a delivering position to deliver said one fitment (28), applying said one fitment (28) to one container (16B) and at the same time bringing another receiving means (50) of another (36) of said arms (32-38) to a forward end position (Figure 2) constituting a receiving position to receive another fitment (28), and placing said other fitment (28) onto said other receiving means (50), **characterized in that** each said forward end position (Figure 2) is at a predetermined spacing (di) from a waiting position in said track (46) of the sealing flange (54) of the fitment (28), and said placing of said other fitment (28) is performed by moving said other fitment (28) onto said other receiving means (50).

5. A method according to claim 4, and further comprising, after said applying, fixing said one fitment (28) to said one container (16B), said placing of said other fitment (28) being performed in a timed relationship with said fixing.

6. A method according to claim 5, wherein said applying is performed by axially advancing said applicator (12), and said applicator (12) is axially retracted following said fixing.

7. A method according to claim 5 or 6, wherein said placing and said fixing are concurrent.

## Patentansprüche

1. Vorrichtung zur Verwendung zum Anbringen von Fittings an Behältern, mit einem Applikator (12) mit mindestens zwei Armen (32-38), welche um eine Achse (58) herum verteilt sind und jeweils in einer distalen Endzone eine Aufnahmeeinrichtung (50) zum Aufnehmen und Tragen eines Fitting (28) aufweisen; einer Versiegelungsflansch (54)-Antriebseinrichtung (56) zum Drehen des Applikators (12) derart, dass ein Arm (32), der ein Fitting (28) trägt, das eine Fitting (28) mit einem Behälterteil (16B) ausrichtet, während die Aufnahmeeinrichtung des anderen Arms (36) in eine Position zum Aufnehmen eines weiteren Fitting (28) von einer benachbarten Spur (46) gebracht wird, und ferner zum axialen Bewegen des Applikators (12), um ein Fitting (28) an dem einen Behälterteil (16B) anzubringen und die Aufnahmeeinrichtung (50) des anderen Arms (36) in eine vordere Endposition zu bringen (Fig. 2); und einer Platziereinrichtung (40-44) zum Angreifen an dem weiteren Fitting (28) und Bewegen des weiteren Fitting (28) aus der Spur (46) in Richtung des anderen Arms (36),
**dadurch gekennzeichnet, dass**
sich die vordere Endposition (Fig. 2) in einem vorbestimmten Abstand (d') zu einer Warteposition in der Spur (46) des Versiegelungsflansches (54) des weiteren Fitting (28) befindet.

2. Vorrichtung nach Anspruch 1, ferner mit einer Befestigungseinrichtung (62) zum Befestigen des einen Fitting (28) an dem einen Behälterteil (16B), wobei die Platziereinrichtung (40-44) zum Bewegen des weiteren Fitting (28) aus der Spur (46) zu dem anderen Arm (36) in zeitlicher Abstimmung mit dem Befestigen des einen Fitting (28) an dem einen Behälterteil (16B) vorgesehen ist.

3. Vorrichtung nach Anspruch 1 oder 2, bei der die Platziereinrichtung (40-44) einen Kolben (40) mit einer Endeinrichtung (44) aufweist, die an einem Körper des weiteren Fitting (28) anliegt und bewirkt, dass ein Flansch (54) an dem Körper aus der Spur (46) herausspringt und sich über die vorbestimmte Distanz (d') bewegt, um das weitere Fitting (28) gleitend an der Aufnahmeeinrichtung (50) des anderen Arms (36) anzubringen.

4. Verfahren zum Anbringen von jeweils Versiegelungsflansche aufweisenden Fittings an Behältern, mit folgenden Schritten: Drehen eines Applikators (12) mit mehreren Armen (32-38) derart, dass eine Aufnahmeeinrichtung (50) eines (32) der Arme (32-38) in eine vordere Endposition (Fig. 2) gebracht wird, die eine Aufnahmeposition zum Aufnehmen eines Fitting (28) darstellt; Platzieren eines Fitting (28) an der einen Aufnahmeeinrichtung (50); ferner Drehen des Applikators (12) derart, dass die eine Aufnahmeeinrichtung (50) und somit das eine Fitting (28) in eine Abgabeposition zum Abgeben des Fitting (28) gebracht wird; Anbringen des einen Fitting (28) an einem Behälterteil (16B) und gleichzeitiges Bringen einer anderen Aufnahmeeinrichtung (50) eines anderen Arms (36) der Arme (32-38) in eine vordere Endposition (Fig. 2), die eine Aufnahmeposition zum Aufnehmen eines weiteren Fitting (28) darstellt; und Platzieren des weiteren Fitting (28) an der anderen Aufnahmeeinrichtung (50),
**dadurch gekennzeichnet, dass**
sich jede vordere Endposition (Fig. 2) in einem vorbestimmten Abstand (d') zu einer Warteposition in der Spur (46) des Versiegelungsflansches (54) des Fitting (28) befindet, und das Platzieren des weiteren Fitting (28) durch Bewegen des weiteren Fitting (28) auf die andere Aufnahmeeinrichtung (50) erfolgt.

5. Verfahren nach Anspruch 4, bei dem ferner nach dem Anbringen das eine Fitting (28) an dem einem Behälterteil (16B) befestigt wird, wobei das Platzieren des weiteren Fitting (28) in zeitlicher Abstimmung mit dem Befestigen erfolgt.

6. Verfahren nach Anspruch 5, bei dem das Anbringen durch axiales Vorschieben des Applikators (12) erfolgt und der Applikator (12) nach dem Befestigen axial zurückgezogen wird.

7. Verfahren nach Anspruch 5 oder 6, bei dem das Platzieren und das Befestigen gleichzeitig erfolgen.

## Revendications

1. Dispositif utilisable pour appliquer des adaptateurs à des récipients, comprenant un applicateur (12) ayant au moins deux bras (32-38) répartis autour d'un axe (58) et ayant chacun, dans une zone d'extrémité distale, des moyens de réception (50) pour recevoir et transporter un adaptateur (28) comprenant une bride d'étanchéité (54), des moyens d'entraînement (56) disposés pour faire tourner ledit applicateur (12) afin d'amener un premier bras (32) portant un premier adaptateur (28) à aligner ledit premier adaptateur (28) avec un premier récipient (16B) tout en plaçant les moyens de réception d'un autre bras (36) en position pour recevoir un autre adaptateur (26) en provenance d'une piste voisine (46), et disposé également pour déplacer axialement l'applicateur (26) afin d'appliquer ledit premier adaptateur (28) sur ledit premier récipient (16B) et d'amener les moyens de réception (50) dudit autre bras (36) à une position d'extrémité vers l'avant (Figure 2), et des moyens de mise en place (40-44) pour engager ledit autre adaptateur (28) et déplacer ledit autre adaptateur (28) depuis ladite piste (46) vers ledit autre bras (36), à un espacement prédéterminé (d') d'une position d'attente dans ladite piste (46) de la bride d'étanchéité (54) dudit autre adaptateur (28).

2. Dispositif selon la revendication 1, et comprenant en outre des moyens de fixation (62) pour fixer ledit premier adaptateur (28) audit premier récipient (16B), lesdits moyens de mise en place (40-44) étant disposés pour déplacer ledit autre adaptateur (28) depuis ladite piste (46) jusqu'audit autre bras (36) dans une relation synchronisée avec la fixation dudit premier adaptateur (28) audit premier récipient (16B).

3. Dispositif selon la revendication 1 ou 2, dans lequel lesdits moyens de mise en place (40-44) comprennent un piston (40) ayant des moyens d'extrémité (44) pour venir en butée contre un corps dudit autre adaptateur (28) et amener une bride (54) prévue sur ledit corps à sortir brusquement hors de ladite piste (46) et se déplacer de ladite distance prédéterminée (d') pour monter ledit autre adaptateur (28) de manière coulissante sur les moyens de réception (50) dudit autre bras (36).

4. Un procédé pour appliquer, à des récipients, des adaptateurs comportant des brides d'étanchéité respectives, comprenant les étapes consistant à faire tourner un applicateur (12) comportant une pluralité de bras (32-38) de manière à amener un premier moyen de réception (50) d'un premier (32) des bras (32-38) à une position d'extrémité vers l'avant (Figure 2) en constituant une position de réception pour recevoir un premier adaptateur (28), placer ledit premier adaptateur (28) sur ledit premier moyen de réception (50), faire tourner encore l'applicateur (12) pour amener ledit premier moyen de réception (50) et, ainsi, ledit premier adaptateur (28) à une position d'amenée pour amener ledit premier adaptateur (28), appliquer ledit premier adaptateur (28) à un premier récipient (16B) et, en même temps, amener un autre moyen de réception (50) d'un autre (36) desdits bras (32-38) à une position d'extrémité vers l'avant (Figure 2) en constituant une position de réception pour recevoir un autre adaptateur (28), et placer ledit autre adaptateur (28) sur ledit autre moyen de réception (50), **caractérisé en ce que** chacune desdites positions d'extrémité vers l'avant (Figure 2) est à un espacement prédéterminé (d'₁) d'une position d'attente dans ladite piste (46) de la bride d'étanchéité (54) de l'adaptateur (28), ladite mise en place dudit autre adaptateur (28) étant effectuée en déplaçant ledit autre adaptateur (28) sur ledit autre moyen de réception (50).

5. Un procédé selon la revendication 4, et comprenant en outre, après ladite application, la fixation dudit premier adaptateur (28) audit premier récipient (16B), ladite mise en place dudit autre adaptateur (28) étant effectuée dans une relation synchronisée avec ladite fixation.

6. Un procédé selon la revendication 5, dans lequel ladite application est effectuée en faisant avancer axialement ledit applicateur (12), ledit applicateur (12) étant axialement rétracté après ladite fixation.

7. Un procédé selon la revendication 5 ou 6, dans lequel ladite mise en place et ladite fixation sont concourantes.
